# EUROPEAN PATENT APPLICATION

(11) **EP 4 604 207 A1**
(43) Date of publication of application: **20.08.2025**
(21) Application number: 24875753.6
(22) Date of filing: 12.10.2024
(51) Int. Cl.: H01M 4/36, H01M 4/133, H01M 4/136, H01M 4/1393, H01M 4/1397

(54) **COMPOSITE POSITIVE ELECTRODE MATERIAL, PREPARATION METHOD THEREFOR, POSITIVE ELECTRODE SHEET, SECONDARY BATTERY, AND ELECTRIC DEVICE<u />**

(30) Priority: 05.01.2024 CN 202410021028
(71) Applicant: Contemporary Amperex Technology (Hong Kong) Limited, Hong Kong (HK)
(72) Inventor: BIE, Changfeng, Ningde Fujian 352100 (CN); SHANG, Yibo, Ningde Fujian 352100 (CN); GAO, Yuzhong, Ningde Fujian 352100 (CN); LI, Xiaojing, Ningde Fujian 352100 (CN); HE, Siyuan, Ningde Fujian 352100 (CN); NI, Huan, Ningde Fujian 352100 (CN)
(74) Representative: Jacob, Reuben Ellis
(86) International application number: PCT/CN2024/124410
(87) International publication number: WO 2025/145722

(57) **Abstract**

This application provides a composite positive electrode material and preparation method thereof, a positive electrode plate, a secondary battery, and an electric apparatus. The preparation method includes: mixing a lithium source, a phosphorus source, an iron source, a carbon source, and a carbon graphitization catalyst in a predetermined ratio with a solvent to form a mixed slurry; grinding and drying the mixed slurry to obtain a mixed dry substance; and sintering the mixed dry substance to obtain the composite positive electrode material, a sintering temperature being 750°C-840°C.

## Description

### CROSS-REFERENCE TO RELATED APPLICATIONS

This application claims priority to Chinese patent application No. 202410021028.7, filed on January 5, 2024 and entitled "COMPOSITE POSITIVE ELECTRODE MATERIAL AND PREPARATION METHOD THEREOF, POSITIVE ELECTRODE PLATE, SECONDARY BATTERY, AND ELECTRIC APPARATUS", which is incorporated herein by reference in its entirety.

### TECHNICAL FIELD

This application relates to the field of battery technologies, and in particular to, a composite positive electrode material and preparation method thereof, a positive electrode plate, a secondary battery, and an electric apparatus.

### BACKGROUND

Graphene is a two-dimensional material formed by carbon atoms arranged in a hexagonal lattice in an sp2 hybridized bond. Theoretically, graphene is only one carbon atom thick, with excellent physical properties such as large theoretical specific surface area, high electron mobility, high thermal conductivity, and high Young's modulus, thus showing potential application value in many fields such as mechanics, energy storage, catalysis, electronic devices, and environmental processing. It should be noted that the actual synthesized two-dimensional carbon graphene structure is typically composed of multiple layers of carbon atoms.

Compared with the conventional conductive agent in lithium-ion batteries, graphene has better conductivity, ultra-fast two-dimensional plane transfer characteristics, and a quite small bulk density. This means that adding a small amount of graphene can achieve the effect of a large amount of conventional conductive agent, thereby reducing the proportion of the conductive agent, increasing the proportion of an electrode material and the energy density of a device.

A polyanion-type positive electrode material, including a phosphate-based positive electrode material, has poor electronic conductivity and ionic conductivity due to the inherent structural characteristics, requiring the use of a high-conductivity coating layer and nanotechnology to improve the electrical performance thereof. Compounding graphene with a positive electrode material is an effective modification means by which a compounded material can have significantly improved electrochemical performance.

Graphene needs to be prepared at a high temperature, and baking at a high temperature for forming a positive electrode material causes significant growth in particle size and formation of impurity phases in the positive electrode material, leading to degradation in electrochemical performance of the material. The conventional method for preparing a graphene composite positive electrode material is to first prepare a graphene material, mix the graphene material with a positive electrode material precursor, and sinter them. Therefore, this process procedure is complex and costly.

### SUMMARY

This application provides a composite positive electrode material and preparation method thereof, a positive electrode plate, a secondary battery, and an electric apparatus, to simplify the preparation process of the composite positive electrode material and reduce the costs.

A first aspect of this application provides a preparation method of a composite positive electrode material. The preparation method includes: mixing a lithium source, a phosphorus source, an iron source, a carbon source, and a carbon graphitization catalyst in a predetermined ratio with a solvent to form a mixed slurry; grinding and drying the mixed slurry to obtain a mixed dry substance; and sintering the mixed dry substance to obtain the composite positive electrode material, a sintering temperature being 750°C-840°C.

In the preparation method of a composite positive electrode material in the first embodiment of this application, a one-step method is used to prepare a polyanion-type positive electrode material and form a carbon material containing graphene. The carbon material covers at least part of a surface of the polyanion-type positive electrode material to form a coating layer and/or disperses between the particles of the polyanion-type positive electrode material. Graphene is connected to the coating layer or freely distributed between the particles of the polyanion-type positive electrode material, simplifying the preparation process procedure of the composite positive electrode material. In this application, the sintering temperature is further controlled within the range of 750°C-840°C, leading to large-sized particles and small-sized particles in the resulting composite positive electrode material, thus achieving granular composition of large and small particles. This allows the resulting composite positive electrode material to have a high powder compacted density. For example, the powder compacted density of the composite positive electrode material under 226.0738 Mpa (corresponding to 3T) is greater than or equal to 2.42 g/cm³.

In any embodiment of the first aspect of this application, the carbon graphitization catalyst includes any one or more of metal or metal oxide, the metal includes Fe and/or Ni, and the metal oxide includes any one or more of FeO, Fe₃O₄, Fe₂O₃, CuO, NiO, MnO, Mn₃O₄, V₂O₅, V₂O₃, or VO₄. The above metal and metal oxide, when used as catalysts, are relatively stable during sintering and are not prone to burning off.

In any embodiment of the first aspect of this application, an average particle size of the carbon graphitization catalyst is 100 nm-400 nm, optionally 100 nm-330 nm. When a nano-scale carbon graphitization catalyst within the above particle size range is mixed with other materials, a large area of contact with the carbon source can be obtained as much as possible, thereby improving the catalytic efficiency.

In any embodiment of the first aspect of this application, a mass ratio of the carbon graphitization catalyst to the carbon source is 1: 100-1:30.

In any embodiment of the first aspect of this application, the mixed slurry further includes a lithium-site doping-element raw material, a phosphorus-site doping-element raw material, an iron-site doping-element raw material, and an oxygen-site doping-element raw material, where in the mixed slurry, a total number of moles of element lithium in the lithium source and a doping element in the lithium-site doping-element raw material is M1, a total number of moles of element iron in the iron source and a doping element in the iron-site doping-element raw material is M2, a total number of moles of element phosphorus in the phosphorus source and a doping element in the phosphorus-site doping-element raw material is M3, M1:M2:M3 is (1.0-1.1):(0.95-1.0):(1.0-1.1), M2:M3 is less than 1:1, and a ratio of a mass of the carbon graphitization catalyst to a total mass of the iron source and the iron-site doping-element raw material is (1:1000)-(1:100).

In any embodiment of the first aspect of this application, M2:M3 is greater than or equal to 0.96:1 and less than 1:1.

In any embodiment of the first aspect of this application, the polyanion-type positive electrode material includes lithium-containing phosphate, and the lithium-containing phosphate includes at least one of lithium iron phosphate and a doping and/or coating modified compound thereof.

In any embodiment of the first aspect of this application, the carbon source includes one or more of glucose, sucrose, fructose, citric acid, starch, polyvinyl alcohol, polyethylene glycol, or polyaniline.

In any embodiment of the first aspect of this application, the grinding includes ball milling and sand milling performed sequentially, after the ball milling, Dᵥ50 of insoluble particles in the mixed slurry is 2.0 µm-5.0 µm, optionally 2.0 µm-4.0 µm; and after the sand milling, Dᵥ50 of the insoluble particles in the mixed slurry is 0.3 µm-1.2 µm, optionally 0.3 µm-0.4 µm.

In any embodiment of the first aspect of this application, the process of sintering the mixed dry substance includes: heating the mixed dry substance to 780°C-820°C, where a heating time is 2 h-9 h, and the temperature of 780°C-820°C is maintained for 6 h-20 h.

In any embodiment of the first aspect of this application, the sintering is conducted in a reducing atmosphere, and the reducing atmosphere includes a reducing gas and a protective gas. Optionally, the reducing gas includes any one or more of hydrogen, acetone, propylene, carbon monoxide, methanol, acetylene, methane, ethylene, or ethane. Optionally, the protective gas includes any one or more of nitrogen or inert gas.

In any embodiment of the first aspect of this application, a volume percentage of the reducing gas in the reducing atmosphere is 1%-8%. The addition of the reducing atmosphere not only helps to increase the carbonization rate of the carbon source but also significantly improves the catalytic effect of the carbon graphitization catalyst in the form of metal oxide, further optimizing the carbon graphitization effect, thus allowing for a larger percentage of the graphene in the carbon coating layer.

In any embodiment of the first aspect of this application, after sintering, the preparation method further includes the process of crushing the composite positive electrode material, where Dᵥ50 of the crushed composite positive electrode material is 0.6 µm-2.0 µm.

A second aspect of this application provides the above composite positive electrode material. The composite positive electrode material includes a polyanion-type positive electrode material and a carbon material, the carbon material covers at least part of a surface of the polyanion-type positive electrode material and/or disperses between particles of the polyanion-type positive electrode material, the carbon material includes graphene, and a powder compacted density of the composite positive electrode material under 226.0738 Mpa is greater than or equal to 2.42 g/cm³, optionally greater than or equal to 2.53 g/cm³.

In any embodiment of the second aspect of this application, a room temperature turbidity of a slurry formed by mixing the composite positive electrode material with water in a mass ratio of 1:40 is 200 FTU-400 FTU, optionally 240 FTU-280 FTU.

In any embodiment of the second aspect of this application, a mass proportion of a magnetic substance in the composite positive electrode material is less than or equal to 1 ppm, thereby controlling the self-discharge defect of the composite positive electrode material.

A third aspect of this application provides a positive electrode plate including a positive electrode film layer, where the positive electrode film layer includes a positive electrode active material, and the positive electrode active material includes the composite positive electrode material provided in any embodiment of the second aspect.

In any embodiment of the third aspect, based on a total cross-sectional area of the positive electrode active material, a cross-sectional area percentage of the composite positive electrode material with a primary particle size of 50 nm-150 nm is 10%-35%, a cross-sectional area percentage of the composite positive electrode material with a primary particle size of 150 nm-1500 nm is 30%-60%, and a cross-sectional area percentage of the composite positive electrode material with a primary particle size not less than 1500 nm is 10%-35%.

A fourth aspect of this application provides a secondary battery including a positive electrode plate, where the positive electrode plate includes the positive electrode plate provided in any embodiment of the third aspect.

A fifth aspect of this application provides an electric apparatus including a secondary battery, where the secondary battery includes the secondary battery provided in any embodiment of the fourth aspect.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a transmission electron microscope (TEM) image of a composite lithium iron phosphate positive electrode material obtained in Preparation Example 1 of this application.
FIG. 2 is a transmission electron microscope image of a composite lithium iron phosphate positive electrode material obtained in Comparative preparation example 1 of this application.
FIG. 3 is a schematic diagram of a secondary battery according to an embodiment of this application.
FIG. 4 is an exploded view of the secondary battery according to the embodiment of this application in FIG. 3.
FIG. 5 is a schematic diagram of a battery module according to an embodiment of this application.
FIG. 6 is a schematic diagram of a battery pack according to an embodiment of this application.
FIG. 7 is an exploded view of the battery pack according to the embodiment of this application in FIG. 6.
FIG. 8 is a schematic diagram of an electric apparatus using a secondary battery as a power source according to an embodiment of this application.

The accompanying drawings are not drawn to scale.

Description of reference signs:
1. battery pack; 2. upper box body; 3. lower box body; 4. battery module; 5. secondary battery cell; 51. housing; 52. electrode assembly; and 53. top cover assembly.

### DESCRIPTION OF EMBODIMENTS

The following further describes embodiments of this application in detail with reference to the accompanying drawings and embodiments. The detailed description of the embodiments and the accompanying drawings are intended to illustrate the principle of this application, rather than to limit the scope of this application, meaning this application is not limited to the embodiments described herein.

The following specifically discloses in detail embodiments of a composite positive electrode material and a preparation method thereof, a positive electrode plate, a secondary battery, and an electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and the like.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise specified, all the steps in this application can be performed sequentially or randomly, preferably, performed sequentially. For example, the method including steps (a) and (b) indicates that the method may include steps (a) and (b) performed sequentially or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive. For example, terms "include" and "contain" may mean that other unlisted components may also be included or contained.

Unless otherwise stated, in this application, the term "or" is inclusive. For example, any one of the following conditions satisfies condition "A or B": A is true (or exists) and B is false (or does not exist); A is false (or does not exist) and B is true (or exists); or both A and B are true (or exist).

### [Secondary battery]

The secondary battery, also referred to as a rechargeable battery or a storage battery, is a battery that can be charged after being discharged to activate active materials for continuous use.

Generally, a secondary battery includes a positive electrode plate, a negative electrode plate, a separator, and an electrolyte. During charge and discharge of the battery, active ions (for example, lithium ions or sodium ions) intercalate and deintercalate back and forth between the positive electrode plate and the negative electrode plate. The separator is sandwiched between the positive electrode plate and the negative electrode plate to mainly prevent short circuit between the positive and negative electrodes and allow active ions to pass through. The electrolyte mainly conducts the active ions between the positive electrode plate and the negative electrode plate.

As previously mentioned, the current preparation of a composite positive electrode material requires the separate preparation of graphene, but the process procedure is complex and costly. To resolve this problem, a first embodiment of this application provides a preparation method of a composite positive electrode material. This preparation method includes:
mixing a lithium source, a phosphorus source, an iron source, a carbon source, and a carbon graphitization catalyst in a predetermined ratio with a solvent to form a mixed slurry; grinding and drying the mixed slurry to obtain a mixed dry substance; and sintering the mixed dry substance to obtain the composite positive electrode material, a sintering temperature being 750°C-840°C.

The carbon graphitization catalyst is a catalyst catalyzing conversion of carbon to graphene. The composite positive electrode material obtained using the foregoing preparation method includes a polyanion-type positive electrode material and a carbon material, the carbon material covers at least part of a surface of the polyanion-type positive electrode material and/or disperses between particles of the polyanion-type positive electrode material, and the carbon material includes graphene.

In the preparation method of a composite positive electrode material in the first embodiment of this application, a one-step method is used to prepare the polyanion-type positive electrode material and form the carbon material containing graphene. The carbon material covers at least part of a surface of the polyanion-type positive electrode material to form a coating layer and/or disperses between the particles of the polyanion-type positive electrode material. It can be seen that graphene is connected to the coating layer or freely distributed between the particles of the polyanion-type positive electrode material, thus simplifying the preparation process procedure of the composite positive electrode material. In this application, the sintering temperature is further controlled within the range of 750°C-840°C, leading to large-sized particles and small-sized particles in the resulting composite positive electrode material, thus achieving granular composition of large and small particles. This allows the resulting composite positive electrode material to have a high powder compacted density, thereby increasing the energy density of the cell. For example, the powder compacted density of the composite positive electrode material under 226.0738 Mpa is greater than or equal to 2.42 g/cm³.

As the sintering temperature rises, the particles of the composite positive electrode material increase, while the amount of graphene produced decreases. In the preparation method of this application, the sintering temperature being controlled within the above range improves both the powder compacted density and the amount of graphene produced as much as possible, thereby improving the overall performance of the battery.

The carbon graphitization catalyst used in this application may be selected from conventional carbon graphitization catalysts. In some embodiments, the carbon graphitization catalyst includes any one or more of metal or metal oxide, the metal includes Fe and/or Ni, and the metal oxide includes any one or more of FeO, Fe₃O₄, Fe₂O₃, CuO, NiO, MnO, Mn₃O₄, V₂O₅, V₂O₃, or VO₄. The above metal and metal oxide, when used as catalysts, are relatively stable during sintering and are not prone to burning off. If elemental metal remains in the process of using the metal to catalyze carbon into graphitization, the K value of the self-discharge of the battery is affected. Preferably, the residue of the metal oxide does not affect the K value of the self-discharge of the battery.

In some embodiments, a weight percentage of carbon formed after the carbonization of the carbon source in the composite positive electrode material being 0.6%-2.5% is used as a reference. The amount of the carbon source used is set based on carbonization rates of different carbon sources, and the carbonization rates of different carbon sources all can be obtained through the expertise in the field. Details are not described in this application.

In some embodiments, the carbon source includes one or more of glucose, sucrose, fructose, citric acid, starch, polyvinyl alcohol, polyethylene glycol, or polyaniline. Glucose, sucrose, fructose, and citric acid are small molecule carbon sources, while starch, polyvinyl alcohol, polyethylene glycol, and polyaniline are macromolecular carbon sources.

Due to the variety of raw materials used in the one-step method of this application, a proportion of the carbon source in the whole slurry is small, and a proportion of the carbon graphitization catalyst as a catalyst in the mixed slurry is even smaller. To further improve the catalytic effect of the carbon graphitization catalyst on the carbon source, in some embodiments, an average particle size of the carbon graphitization catalyst is 100 nm-400 nm, optionally 100 nm-330 nm, for example, 100 nm-200 nm, 200 nm-330 nm, or 300 nm-400 nm. When a nano-scale carbon graphitization catalyst within the above particle size range is mixed with other materials, a large area of contact with the carbon source can be obtained as much as possible, thereby improving the catalytic efficiency. The above average particle size is calculated based on the longest diameter of the primary particles.

In some embodiments, to increase the conversion rate of graphene as much as possible and better improve the conductivity of the polyanion-type positive electrode material, in some embodiments a mass ratio of the carbon graphitization catalyst to the carbon source is 1:100-1:30, for example, 1:100, 5:312, or 10:312, optionally 1:63-1:30.

In some embodiments, the mixed slurry further includes a lithium-site doping-element raw material, a phosphorus-site doping-element raw material, an iron-site doping-element raw material, and an oxygen-site doping-element raw material. For the amounts or percentages of the lithium source, the phosphorus source, the iron source, the lithium-site doping-element raw material, the iron-site doping-element raw material, the phosphorus-site doping-element raw material, and the oxygen-site doping-element raw material in this application, reference may be made to the amounts or percentages of those in the synthesis of conventional phosphate-based positive electrode materials or the composition of the intended phosphate-based positive electrode material. Typically, to improve performance such as cycling performance, gram capacity, or rate, a large amount of iron source and iron-site doping-element raw material is selected. In some embodiments, in the mixed slurry, a total number of moles of element lithium in the lithium source and a doping element in the lithium-site doping-element raw material is M1, a total number of moles of element iron in the iron source and a doping element in the iron-site doping-element raw material is M2, a total number of moles of element phosphorus in the phosphorus source and a doping element in the phosphorus-site doping-element raw material is M3, M1:M2:M3 is (1.0-1.1):(0.95-1.0):(1.0-1.1), and M2:M3 is less than 1:1. When a metal oxide is used as the carbon graphitization catalyst, the metal oxide serves as a catalyst, and during sintering, the metal element therein can act as an additional doping element to enter a framework structure of the phosphate-based positive electrode material. Therefore, the amounts of element iron in the iron source and the doping element in the iron-site doping-element raw material can be appropriately reduced. In the above molar ratio, M2 is less than M3. Smaller M2 results in a larger particle size of the composite positive electrode material obtained under the same bake condition, and a larger compacted density.

Certainly, if the mixed slurry does not include the corresponding lithium-site doping-element raw material, phosphorus-site doping-element raw material, iron-site doping-element raw material, and oxygen-site doping-element raw material, M1, M2, and M3 do not include the number of moles of the corresponding doping elements either.

However, excessively small M2:M3 causes a decrease in the gram capacity of the composite positive electrode material. In some embodiments, M2:M3 is greater than or equal to 0.96:1 and less than 1:1. This ensures that both the compacted density and the gram capacity are improved as much as possible.

When a metal oxide is selected as the carbon graphitization catalyst, although it may be used as a doping element, its main function is still to catalyze the conversion of carbon to graphene. In some embodiments, a ratio of a mass of the carbon graphitization catalyst to a total mass of the iron source and the iron-site doping-element raw material is (1:1000)-(1:100), preferably (1:300)-(1:100), thereby fully exerting the effects of the catalyst, the iron source, and the iron-site doping element without causing excessive residue of the carbon graphitization catalyst. Additionally, the amount of the graphitization catalyst within the above ratio range ensures that a percentage of the resulting graphene is at an appropriate level, avoiding negative effects caused by an excessively high percentage of the graphene, such as an excessively large viscosity of the positive electrode slurry and increased difficulty in processing.

The phosphorus source, the iron source, the optional lithium-site doping-element raw material, the optional iron-site doping-element raw material, the optional phosphorus-site doping-element raw material, and the optional oxygen-site doping-element raw material that are used in this application may be selected from salts such as sulfate, nitrate, carbonate, hydrochloride, phosphate, and oxalate of each element.

In some embodiments, the polyanion-type positive electrode material includes lithium-containing phosphate, and the lithium-containing phosphate includes at least one of lithium iron phosphate and a doping and/or coating modified compound thereof. In some embodiments, the prepared lithium-containing phosphate includes a material with a molecular formula LiₘAₐFeₓDₐP_{y}EₑO_{z}G_{g}, where A includes at least one element of Al, Na, K, or Mg; D includes at least one element of Cu, Mn, Cr, Zn, Pb, Ca, Co, Ni, Sr, Nb, Ti, or V; E includes at least one element of B, S, Si, or N; G includes at least one element of S, F, Cl, or Br; m is selected from a range of 0.5 to 1.15 (for example, 0.5, 0.6, 0.7, 0.8, 0.9, 1.0, or 1.1); a is selected from a range of 0 to 0.1 (for example, 0, 0.01, 0.02, 0.03, 0.04, 0.05, 0.06, 0.07, 0.08, 0.09, or 0.1); x is selected from a range of 0.5 to 1 (for example, 0.5, 0.6, 0.7, 0.8, 0.9, or 1); d is selected from a range of 0 to 0.5 (for example, 0, 0.1, 0.2, 0.3, 0.4, or 0.5); y is selected from a range of 0.5 to 1 (for example, 0.5, 0.6, 0.7, 0.8, 0.9, or 1); e is selected from a range of 0 to 0.5 (for example, 0, 0.1, 0.2, 0.3, 0.4, or 0.5); z is selected from a range of 3.5 to 4 (for example, 3.5, 3.6, 3.7, 3.8, 3.9, or 4.0); and g is selected from a range of 0 to 0.5 (for example, 0, 0.1, 0.2, 0.3, 0.4, or 0.5). For example, the element A is a lithium-site doping element, the element D is an iron-site doping element, the element E is a phosphorus-site doping element, and the element G is an oxygen-site doping element. In the foregoing embodiments, the described carbon material covers the surface of the lithium-containing phosphate and/or disperses between particles of the lithium-containing phosphate.

In some embodiments, the iron source includes at least one of iron phosphate and ferrous oxalate; the lithium source includes at least one of lithium dihydrogen phosphate, lithium hydrogen phosphate, lithium nitrate, lithium carbonate, lithium phosphate, lithium hydroxide, or lithium acetate; and the phosphorus source includes at least one of ammonium dihydrogen phosphate, ammonium phosphate, lithium phosphate, phosphoric acid, or iron phosphate.

The percentage of the solvent in the mixed slurry affects the mixing uniformity effect after grinding and the drying efficiency. A large amount of solvent helps to improve the material uniformity; and a small amount of solvent helps to improve the drying efficiency. The above solvent may be selected from commonly used volatile solvents, such as water and ethanol. In some embodiments, water is selected as the solvent. In some embodiments, a ratio of a total mass of the lithium source, the phosphorus source, the iron source, the optional lithium-site doping-element raw material, the optional iron-site doping-element raw material, the optional phosphorus-site doping-element raw material, and the optional oxygen-site doping-element raw material to the mass of the solvent is (1-3):(1-7).

The above grinding can refine the insoluble particles in the mixed slurry and promote the mixing of insoluble substances. In some embodiments, the grinding includes ball milling and sand milling performed sequentially, after the ball milling, Dᵥ50 of insoluble particles in the mixed slurry is 2.0 µm-5.0 µm, optionally 2.0 µm-4.0 µm; and after the sand milling, Dᵥ50 of the insoluble particles in the mixed slurry is 0.3 µm-1.2 µm, optionally 0.3 µm-0.4 µm. The time and rotation speed of the ball milling and sand milling are controlled to adjust the particle size of the insoluble particles. In some embodiments, the temperature of the ball milling is adjusted to 25°C-35°C, the rotation speed of the ball milling is adjusted to 800 rpm-2000 rpm, and the time of the ball milling is adjusted to 0.5 h-4 h, to obtain insoluble particles within the above Dᵥ50 range. In some embodiments, the temperature of the sand milling is adjusted to 25°C-35°C, the rotation speed of the sand milling is adjusted to 5000 rpm-10000 rpm, and the time of the sand milling is adjusted to 0.5 h-4 h, to obtain insoluble particles within the above Dᵥ50 range.

The above Dᵥ50 is tested using a laser particle size analyzer (Malvern 3000).

In some embodiments, the drying in the preparation method may be achieved using a commonly used drying method in the field, such as spray drying and heating drying. In some embodiments, spray drying is selected for drying. The inlet air temperature and the outlet air temperature of the spray drying affect the drying state of the mixed dry substance, such as particle size and moisture content. In some embodiments, during spray drying, the inlet air temperature is controlled to be 200°C-300°C, and the outlet air temperature is controlled to be 90°C-120°C. Under the above conditions, the spray drying results in mixed dry substance particles with good uniformity, and the moisture content can be controlled below 2%.

The process of sintering the mixed dry substance may refer to a conventional sintering process. In some embodiments, the process of sintering the mixed dry substance includes: heating the mixed dry substance to 780°C-820°C, where a heating time is 2 h-9 h, and the temperature of 780°C-820°C is maintained for 6 h-20 h. For example, the temperature is elevated to 780°C, 790°C, 800°C, 810°C, or 820°C. Controlling the above sintering conditions further balances the powder compacted density and the percentage of the graphene of the resulting composite positive electrode material, thereby optimizing the discharge gram capacity and energy density of the battery as much as possible.

In some embodiments, the sintering is conducted in a reducing atmosphere, where the reducing atmosphere includes any one or more of hydrogen, acetone, propylene, carbon monoxide, methanol, acetylene, methane, ethylene, or ethane. In some embodiments, the reducing atmosphere further also includes a protective gas, where the protective gas is nitrogen and/or an inert gas.

The addition of the reducing atmosphere not only helps to increase the carbonization rate of the carbon source but also significantly improves the catalytic effect of the carbon graphitization catalyst in the form of metal oxide, further optimizing the carbon graphitization effect, thus allowing for a larger percentage of the graphene in the composite positive electrode material.

**In** some embodiments, a volume percentage of the reducing gas in the reducing atmosphere is 1%-8%. It should be noted that the volume percentage is calculated based on the volumes of the introduced reducing gas and protective gas. The percentage of the reducing gas being within the above range can not only increase the carbonization rate but also facilitate the rate of conversion of metal elements from raw materials containing these metal elements for preparation of a positive electrode material to the positive electrode material.

The composite positive electrode material obtained after sintering has agglomeration. To facilitate the subsequent preparation of the positive electrode plate, in some embodiments, after sintering, the preparation method further includes a process of crushing the composite positive electrode material. To further increase the compacted density of the composite positive electrode material, in some embodiments, Dᵥ50 of the crushed composite positive electrode material is adjusted to 0.6 µm-2.0 µm.

A second embodiment of this application provides a composite positive electrode material. The composite positive electrode material includes a polyanion-type positive electrode material and a carbon material, the carbon material covers at least part of a surface of the polyanion-type positive electrode material and/or disperses between particles of the polyanion-type positive electrode material, the carbon material includes graphene, and a powder compacted density of the composite positive electrode material under 226.0738 Mpa is greater than or equal to 2.42 g/cm³, optionally greater than or equal to 2.53 g/cm³.

The composite positive electrode material may be prepared using the above preparation method in this application. The composite positive electrode material including graphene can improve the conductivity of the composite positive electrode material. Additionally, the composite positive electrode material has a high compacted density, allowing the battery to have a high energy density.

The percentage of the graphene affects not only the conductivity of the composite positive electrode material but also the compacted density of the composite positive electrode material and the turbidity of the positive electrode slurry. When the percentage of the graphene increases, the increased conductivity of the graphene can increase the discharge gram capacity of the cell, and the layered characteristics of the graphene further improve the surface lubricity of the composite positive electrode material, facilitating tight contact between particles, thus increasing the compacted density. Because the adhesiveness of the graphene between particles is enhanced as the percentage of the graphene increases, the turbidity of the positive electrode slurry containing the composite positive electrode material increases. An excessively large percentage of the graphene in the composite positive electrode material causes an excessively large turbidity of the composite positive electrode material contained, leading to difficulty in applying the positive electrode slurry, thus affecting the construction efficiency and the morphology of the positive electrode film layer. Moreover, the excessively large percentage of the graphene in the composite positive electrode material also reduces the effective proportion of the active material, thus decreasing the compacted density and discharge gram capacity of the electrode plate. In some embodiments, the percentage of the graphene is measured based on the turbidity of a slurry formed by mixing the composite positive electrode material with water in a mass ratio of 1:40. To simultaneously improve conductivity, compacted density, and the coating performance of the positive electrode slurry, the room temperature turbidity of the slurry formed by mixing the composite positive electrode material with water in a mass ratio of 1:40 is 200 FTU-400 FTU, optionally 240 FTU-280 FTU. The room temperature in this application is conventionally understood in the field as 15°C-35°C.

The above turbidity is measured using a HACH 2100Q turbidity meter according to the instructions in the manual.

In some embodiments, a mass proportion of the magnetic substance in the composite positive electrode material is less than or equal to 1 ppm. This controls the self-discharge of the composite positive electrode material, thereby prolonging the service life of the battery containing such material.

### [Positive electrode plate]

A positive electrode plate includes a positive electrode film layer, the positive electrode film layer includes a positive electrode active material, and the positive electrode active material includes any one of the composite positive electrode materials provided in the second embodiment.

The composite positive electrode material of this application contains graphene, improving the conductivity and the compacted density of the composite positive electrode material, thereby allowing for better compacted density and coulombic efficiency of the positive electrode plate containing such material.

For example, the positive electrode current collector has two opposite surfaces in its thickness direction, and the positive electrode film layer is provided on either or both of the two opposite surfaces of the positive electrode current collector.

In some embodiments of this application, based on a total cross-sectional area of the positive electrode active material, a cross-sectional area percentage of the composite positive electrode material with a primary particle size of 50 nm-150 nm is 10%-35%, a cross-sectional area percentage of the composite positive electrode material with a primary particle size of 150 nm-1500 nm is 30%-60%, and a cross-sectional area percentage of the composite positive electrode material with a primary particle size not less than 1500 nm is 10%-35%. The composite positive electrode material in the positive electrode plate includes small-sized particles, medium-sized particles, and large-sized particles, achieving granular composition of particle sizes among these particles, thereby further increasing the compacted density of the positive electrode plate. The above composite positive electrode material with different particle sizes may be adjusted based on raw material particles of different particle sizes during preparation, or may be obtained by mixing composite positive electrode materials with different particle size ranges.

The above cross-sectional area percentages are tested using the following method: the positive electrode plate is cut using an argon ion beam in a direction perpendicular to the positive electrode plate, to expose a cross section, the cross section is photographed using a scanning electron microscope, and a longest diameter of the lithium iron phosphate salt particles is statistically analyzed using the long diameter statistical method. The primary particle size in the cross-sectional image refers to a longest distance between two connected points along an edge.

Because particles with a primary particle size less than or equal to 50 nm tend to agglomerate, resulting in significant statistical errors and difficulty in clear individual identification, the particles with a primary particle size less than or equal to 50 nm are not included in the statistical range during particle size statistics.

A percentage of the number of the composite positive electrode materials with a primary particle size of 50 nm-150 nm is calculated by dividing the number of the composite positive electrode materials with a primary particle size of 50 nm-150 nm in the cross section by the number of all positive electrode materials.

A percentage of the number of the composite positive electrode materials with a primary particle size of 150 nm-1500 nm is calculated by dividing the number of the composite positive electrode materials with a primary particle size of 150 nm-1500 nm in the cross section by the number of all positive electrode materials.

A percentage of the cross-sectional area of the composite positive electrode materials with a primary particle size not less than 1500 nm is calculated by dividing the cross-sectional area of the composite positive electrode materials with a primary particle size not less than 1500 nm in the cross section by the area of all the positive electrode materials.

The area of the active material is obtained through statistical analysis of a cross-sectional scanning electron microscope image of the positive electrode plate using Avizo 3D software.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylenetetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

A negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, the metal foil may be a copper foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material for batteries well-known in the art. In an example, the negative electrode active material may include at least one of the following materials: artificial graphite, natural graphite, soft carbon, hard carbon, silicon-based material, tin-based material, lithium titanate, or the like. The silicon-based material may be selected from at least one of elementary silicon, silicon-oxygen compound, siliconcarbon composite, silicon-nitrogen composite, and silicon alloy. The tin-based material may be selected from at least one of elementary tin, tin-oxygen compound, or tin alloy. However, this application is not limited to these materials, but another conventional material that may be used as a negative electrode active material of a battery may be used alternatively. One of these negative electrode active materials may be used alone, or two or more of them may be used in combination.

In some embodiments, the negative electrode film layer further optionally includes a binder. For example, the binder may be at least one selected from styrenebutadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other additives such as a thickener (for example, sodium carboxymethyl cellulose (CMC-Na)).

In some embodiments, the negative electrode plate may be prepared in the following manner: constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

An electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving overcharge performance of the battery and an additive for improving high-temperature performance or low-temperature performance of the battery.

### [Separator]

In some embodiments, the secondary battery further includes a separator. This application has no specific limitation on a type of the separator, and any well-known porous separator with good chemical stability and mechanical stability may be selected.

In some embodiments, a material of the separator may be at least one selected from glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery includes a secondary battery cell or includes a battery module and a battery pack.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

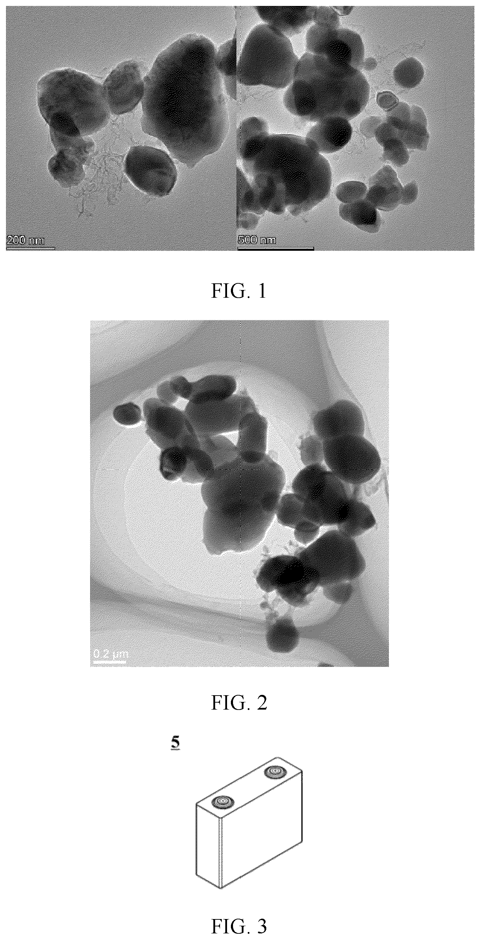

This application does not impose any special limitation on a shape of the secondary battery cell, and the secondary battery may be cylindrical, rectangular, or of any other shapes. For example, FIG. 3 shows a rectangular secondary battery cell 5 as an example.

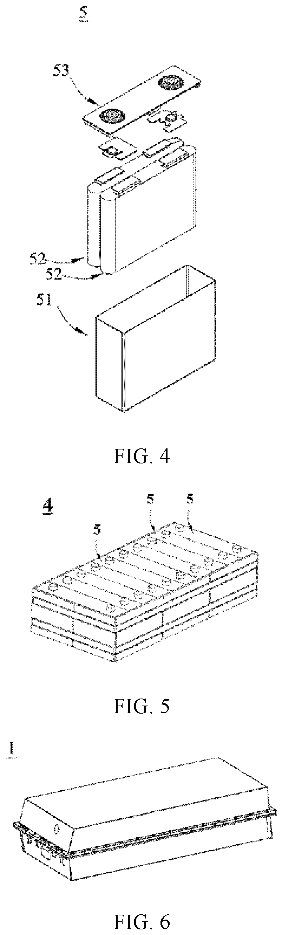

In some embodiments, referring to FIG. 4, the outer package may include a housing 51 and a top cover assembly 53. The housing 51 may include a base plate and side plates connected to the base plate, and the base plate and the side plates enclose an accommodating cavity. The housing 51 has an opening communicating with the accommodating cavity, and the top cover assembly 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates the electrode assembly 52. The secondary battery cell 5 may include one or more electrode assemblies 52, and persons skilled in the art may make choices based on actual requirements.

In some embodiments, secondary battery cells may be assembled into a battery module, and the battery module may include one or more secondary battery cells. The specific quantity may be chosen by persons skilled in the art based on the use and capacity of the battery module.

FIG. 5 shows a battery module 4 as an example. With reference to FIG. 5, in the battery module 4, multiple secondary battery cells 5 may be sequentially arranged in a length direction of the battery module 4. Certainly, they may alternatively be arranged in any other manners. Further, multiple secondary battery cells 5 may be fastened by using fasteners.

Optionally, the battery module 4 may further include an enclosure with an accommodating space, and multiple secondary battery cells 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

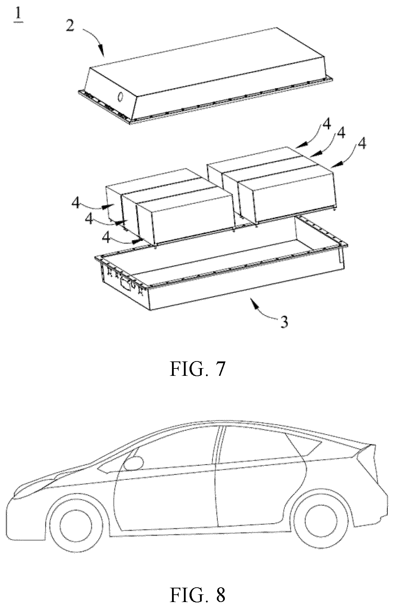

FIGs. 6 and 7 show a battery pack 1 as an example. Referring to FIG. 6 and FIG. 7, the battery pack 1 may include a battery box and multiple battery modules 4 arranged in the battery box. The battery box includes an upper box body 2 and a lower box body 3. The upper box body 2 can cover the lower box body 3 to form an enclosed space for accommodating the battery modules 4. The multiple battery modules 4 may be arranged in the battery box in any manner.

In addition, this application further provides an electric apparatus. The electric apparatus includes the secondary battery provided in this application. The secondary battery may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery cell, battery module, or battery pack may be selected for the electric apparatus depending on requirements for using the electric apparatus.

FIG. 8 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

### [Examples]

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Preparation example 1

Lithium carbonate, iron phosphate, ammonium dihydrogen phosphate, a mixed carbon source formed by glucose and polyethylene glycol in a mass ratio of 90:35, carbon graphitization catalyst Fe₂O₃, and water were mixed, to form a mixed slurry. A molar ratio of element lithium in the lithium carbonate, element iron in the iron phosphate, and element phosphorus in iron phosphate and ammonium dihydrogen phosphate was 1.01:1:1.03. A ratio of a total mass of the lithium carbonate, iron phosphate, and ammonium dihydrogen phosphate to a mass of the water was 2:3. A mass of Fe₂O₃ was 0.5% of a mass of the iron phosphate, an average particle size of Fe₂O₃ was in a range of 200 nm-330 nm, and a mass ratio of Fe₂O₃ to the mixed carbon source was 5:312.

The mixed slurry was sequentially subjected to ball milling, sand milling, and spray drying to obtain a mixed dry substance. A temperature of the ball milling was 25-35°C, a time of the ball milling was 2 h, and a rotation speed of the ball milling was 1000 rpm. After the ball milling, Dᵥ50 of insoluble particles in the mixed slurry was 4 µm. A temperature of the sand milling was 25-35°C, a time of the sand milling was 2 h, and a rotation speed of the sand milling was 8000 rpm. After the sand milling, the Dᵥ50 of the insoluble particles in the mixed slurry was 0.4 µm. During the spray drying, an inlet air temperature was 250°C, and an outlet air temperature was 100°C.

The mixed dry substance was sintered and crushed to obtain a composite lithium iron phosphate positive electrode material. A sintering atmosphere included nitrogen and acetylene, and a volume ratio of the acetylene to the nitrogen was controlled to be 2:98 by adjusting introduction amounts of the nitrogen and the acetylene during sintering. During sintering, the temperature was elevated to 780°C and then maintained, where a heating time was t1, and a maintaining time was t2, t1 being 6 h, and t2 being 13 h. The resulting composite lithium iron phosphate positive electrode material included lithium iron phosphate and a carbon coating covering at least part of a surface of the lithium iron phosphate. As shown in FIG. 1, a TEM image of the composite lithium iron phosphate positive electrode material (equipment model: Thermo Scientific-Talos F200SG2) indicated that the carbon coating layer was adhered with graphene. After crushing, Dᵥ50 of the composite lithium iron phosphate positive electrode material was 1.2 µm.

### Preparation example 2

Based on Preparation example 1, Fe₂O₃ with an average particle size in a range of 100 nm-200 nm was used to replace Fe₂O₃ in Preparation example 1, while the other conditions remained the same as those in Preparation example 1, resulting in a composite lithium iron phosphate positive electrode material of Preparation example 2.

### Preparation example 3

Based on Preparation example 1, Fe₂O₃ with an average particle size in a range of 300 nm-400 nm was used to replace Fe₂O₃ in Preparation example 1, while the other conditions remained the same as those in Preparation example 1, resulting in a composite lithium iron phosphate positive electrode material of Preparation example 3.

### Preparation example 4

Based on Preparation example 1, Fe₂O₃ with an average particle size less than 100 nm was used to replace Fe₂O₃ in Preparation example 1, while the other conditions remained the same as those in Preparation example 1, resulting in a composite lithium iron phosphate positive electrode material of Preparation example 4.

### Preparation example 5

Based on Preparation example 1, Fe₂O₃ with an average particle size in a range of 420 nm-550 nm was used to replace Fe₂O₃ in Preparation example 1, while the other conditions remained the same as those in Preparation example 1, resulting in a composite lithium iron phosphate positive electrode material of Preparation example 5.

### Preparation example 6

Based on Preparation example 1, the amount of Fe₂O₃ used was adjusted such that a mass ratio of Fe₂O₃ to the mixed carbon source was 1:100, and a mass ratio of Fe₂O₃ to iron phosphate was 0.312: 100; and the other conditions remained the same as those in Preparation example 1, resulting in a composite lithium iron phosphate positive electrode material of Preparation example 6.

### Preparation example 7

Based on Preparation example 1, the amount of Fe₂O₃ used was adjusted such that a mass ratio of Fe₂O₃ to the mixed carbon source was 10:312, and a mass ratio of Fe₂O₃ to iron phosphate was 1:100; and the other conditions remained the same as those in Preparation example 1, resulting in a composite lithium iron phosphate positive electrode material of Preparation example 7.

### Preparation example 8

Based on Preparation example 1, the amount of Fe₂O₃ used was adjusted such that a mass ratio of Fe₂O₃ to the mixed carbon source was 1:312, and a mass ratio of Fe₂O₃ to iron phosphate was 1:1000; and the other conditions remained the same as those in Preparation example 1, resulting in a composite lithium iron phosphate positive electrode material of Preparation example 8.

### Preparation example 9

Based on Preparation example 1, the amount of Fe₂O₃ used was adjusted such that a mass ratio of Fe₂O₃ to the mixed carbon source was 0.5:312, and a mass ratio of Fe₂O₃ to iron phosphate was 1:2000; and the other conditions remained the same as those in Preparation example 1, resulting in a composite lithium iron phosphate positive electrode material of Preparation example 9.

### Preparation example 10

Based on Preparation example 1, the amount of Fe₂O₃ used was adjusted such that a mass ratio of Fe₂O₃ to the mixed carbon source was 20:312, and a mass ratio of Fe₂O₃ to iron phosphate was 1:50; and the other conditions remained the same as those in Preparation example 1, resulting in a composite lithium iron phosphate positive electrode material of Preparation example 10.

### Preparation example 11

Based on Preparation example 1, the time of the ball milling, the rotation speed of the ball milling, and the time and rotation speed of the sand milling of the mixed slurry were adjusted such that Dᵥ50 of particles of an insoluble substance in the mixed slurry after the ball milling was 5 µm, and the Dᵥ50 of particles of the insoluble substance in the mixed slurry after the sand milling was 1.2 µm; and the other conditions remained the same as those in Preparation example 1, resulting in a composite lithium iron phosphate positive electrode material of Preparation example 11.

### Preparation example 12

Based on Preparation example 1, the time of the ball milling, the rotation speed of the ball milling, and the time and rotation speed of the sand milling of the mixed slurry were adjusted such that Dᵥ50 of particles of an insoluble substance in the mixed slurry after the ball milling was 2 µm, and the Dᵥ50 of particles of the insoluble substance in the mixed slurry after the sand milling was 0.3 µm; and the other conditions remained the same as those in Preparation example 1, resulting in a composite lithium iron phosphate positive electrode material of Preparation example 12.

### Preparation example 13

Based on Preparation example 1, carbon monoxide was used to replace the acetylene during sintering, while the other conditions remained the same as those in Preparation example 1, resulting in a composite lithium iron phosphate positive electrode material of Preparation example 13.

### Preparation example 14

Based on Preparation example 1, the introduction amounts of the acetylene and the nitrogen were adjusted during sintering such that a volume ratio of the acetylene to the nitrogen was 8:92; and the other conditions remained the same as those in Preparation example 1, resulting in a composite lithium iron phosphate positive electrode material of Preparation example 14.

### Preparation example 15

Based on Preparation example 1, the acetylene was not used during sintering, while the other conditions remained the same as those in Preparation example 1, resulting in a composite lithium iron phosphate positive electrode material of Preparation example 15.

### Preparation example 16

Based on Preparation example 1, Fe₃O₄ was used to replace Fe₂O₃ as the carbon graphitization catalyst, and the other conditions remained the same as those in Preparation example 1, resulting in a composite lithium iron phosphate positive electrode material of Preparation example 16.

### Preparation example 17

Based on Preparation example 1, FeO was used to replace Fe₂O₃ as the carbon graphitization catalyst, and the other conditions remained the same as those in Preparation example 1, resulting in a composite lithium iron phosphate positive electrode material of Preparation example 17.

### Preparation example 18

Based on Preparation example 1, Fe powder was used to replace Fe₂O₃ as the carbon graphitization catalyst, and the other conditions remained the same as those in Preparation example 1, resulting in a composite lithium iron phosphate positive electrode material of Preparation example 18.

### Preparation example 19

Based on Preparation example 1, Ni powder was used to replace Fe₂O₃ as the carbon graphitization catalyst, and the other conditions remained the same as those in Preparation example 1, resulting in a composite lithium iron phosphate positive electrode material of Preparation example 19.

### Preparation example 20

Based on Preparation example 1, NiO was used to replace Fe₂O₃ as the carbon graphitization catalyst, and the other conditions remained the same as those in Preparation example 1, resulting in a composite lithium iron phosphate positive electrode material of Preparation example 20.

### Preparation example 21

Based on Preparation example 1, Mn₃O₄ was used to replace Fe₂O₃ as the carbon graphitization catalyst, and the other conditions remained the same as those in Preparation example 1, resulting in a composite lithium iron phosphate positive electrode material of Preparation example 21.

### Preparation example 22

Based on Preparation example 1, V₂O₅ was used to replace Fe₂O₃ as the carbon graphitization catalyst, and the other conditions remained the same as those in Preparation example 1, resulting in a composite lithium iron phosphate positive electrode material of Preparation example 22.

### Preparation example 23

Based on Preparation example 1, ferrocene was used to replace Fe₂O₃ as the carbon graphitization catalyst, and the other conditions remained the same as those in Preparation example 1, resulting in a composite lithium iron phosphate positive electrode material of Preparation example 23.

### Preparation example 24

Based on Preparation example 1, the amount of the ammonium dihydrogen phosphate was reduced, such that the molar ratio of the element lithium in the lithium carbonate, element iron in the iron phosphate, and element phosphorus in the iron phosphate and ammonium dihydrogen phosphate was 1.01:1:1; and the other conditions remained the same as those in Preparation example 1, resulting in a composite lithium iron phosphate positive electrode material of Preparation example 24.

### Preparation example 25

The sintering temperature of Preparation example 1 was adjusted to 750°C, the heating time t1 was adjusted to 2 h, the maintaining time t2 was adjusted to 20 h, and the other conditions remained the same as those in Preparation example 1.

### Preparation example 26

The sintering temperature of Preparation example 1 was adjusted to 840°C, the heating time t1 was adjusted to 9 h, the maintaining time t2 was adjusted to 6 h, and the other conditions remained the same as those in Preparation example 1.

### Preparation example 27

The sintering temperature of Preparation example 1 was adjusted to 750°C, the heating time t1 was adjusted to 6 h, the maintaining time t2 was adjusted to 13 h, and the other conditions remained the same as those in Preparation example 1.

### Preparation example 28

The sintering temperature of Preparation example 1 was adjusted to 820°C, the heating time t1 was adjusted to 6 h, the maintaining time t2 was adjusted to 13 h, and the other conditions remained the same as those in Preparation example 1.

### Comparative preparation example 1

This example differed from Preparation example 1 in that Fe₂O₃ was not used as a catalyst. FIG. 2 is a TEM image of the resulting composite lithium iron phosphate positive electrode material, without graphene observed.

### Comparative preparation example 2

The sintering temperature of Preparation example 1 was adjusted to 720°C, the heating time t1 was adjusted to 6 h, the maintaining time t2 was adjusted to 13 h, and the other conditions remained the same as those in Preparation example 1.

### Comparative preparation example 3

The sintering temperature of Preparation example 1 was adjusted to 880°C, the heating time t1 was adjusted to 6 h, the maintaining time t2 was adjusted to 13 h, and the other conditions remained the same as those in Preparation example 1.

Turbidity was tested using a HACH 2100Q turbidity meter, and the test method is as follows:
Sample preparation: At room temperature, a 50 mL centrifuge tube was tared, and 1±0.01 g of sample was weighed; four parallel samples were weighed for each sample group; an electronic balance was tared, and 40 g±0.1 g of ultrapure water was weighed and mixed with powder; and the centrifuge tube was placed on a longitudinal mixer at 80 r/min and stirred for 2 h. Centrifugation: the sample was evenly placed in a centrifuge, with a centrifuge speed set to "1500 r/min" for 10 min.
Calibration: A "standard curve" button in the lower left corner was pressed, and a lens cloth was used to wipe water stains and fingerprints from surfaces of standard solution bottles. Evenly shaken standard solutions of 0 FTU (indicating pure water), 20 FTU, 100 FTU, and 800 FTU without air bubbles were placed separately, and a "read" button was clicked for linear calibration. After calibration, a "finish" button was pressed to save the results.
Test: At room temperature, the centrifuge tube and a rubber sleeve were steadily removed from the centrifuge and placed on the table; a 3 mL rubber-tipped dropper was held at the 1.5 mL mark and vertically inserted into the middle of the centrifuge tube to draw 2 mL of solution in one go; and the sample bottle was placed on the electronic balance and tared, and 0.5±0.005 g of solution was weighed and 10±0.1 g of ultrapure water was added. The surface of the sample bottle was wiped clean of water stains and fingerprints using the lens cloth before being placed into a measurement port, and the lid was closed. The test was started by clicking a button, and the data was recorded.

The method for determining a mass proportion of a magnetic material in the composite lithium iron phosphate positive electrode material is as follows:
(1) 1 kg of sample was weighed and placed into a plastic bucket, 6 L of deionized water was added, and a plastic tube was used to cover a φ 24 mmx240 mm magnetic rod (magnetic induction strength of 6000 GS). Then, the magnetic rod was heat-sealed with a heat-sealing clip and placed into the plastic bucket, and they were sealed together. A rotation speed of a roller stirring bucket was set to 60 rpm, and a stirring time was set to 15 min. The sealed bucket was placed on a device for stirring.
(2) Another clean bucket was prepared, and 5±0.2 L of deionized water was added into the bucket. The magnetic substance on the plastic tube was flushed into a solvent, and the magnetic rod was resealed. The above steps were repeated twice to ensure the accuracy of the magnetic substance extraction.
(3) A clean 1 L beaker was prepared, and the magnetic substance on the plastic tube was all rinsed into a beaker. A magnetic block was used to attract the bottom of the beaker, and the non-magnetic substances were washed away 2 or 3 times.
(4) 10 mL of deionized water was measured with a graduated cylinder and added into a 100 mL beaker, and then 10 mL of 36%-38% hydrochloric acid was measured and slowly added into the beaker. The prepared hydrochloric acid solution was poured into the beaker, sealed, and placed into an ultrasonic instrument to be subjected to ultrasonication for 2 min.
(5) After ultrasonication, the beaker was taken out, and the magnetic substance was attracted and gathered at the bottom of the beaker using the magnetic block. The acid solution in the beaker was poured into a waste liquid bucket, the magnetic substance in the beaker was washed 3 times, and an appropriate amount of deionized water was added for filtration.
(6) A filter membrane with a pore size of 0.45 microns was used, and after filtration, a piece of filter paper with magnetic particles on the surface was placed on a slide of a cleanliness microscope and placed into an oven to dry at 60°C for (10±2) minutes. After drying, the filter membrane was weighed to test and calculate the proportion of the magnetic substance. A larger percentage of the magnetic substance in the positive electrode material indicates a more severe self-discharge phenomenon of the cell and a shorter service life of the battery.

Measurement of powder compacted density: A certain amount of powder was used on a special compacting mold (for example, the special mold might be a Sansi UTM7305) with a known diameter, two metal sheets were respectively provided on both the top and bottom of the mold, and the powder was placed in the middle. A pressing force of 226.0738 Mpa (that is, 3T) was applied, a corresponding powder thickness was tested simultaneously, and the compacted density was calculated according to a formula ρ=m/v. The specific operation might refer to the standard: GB/T24533-2009.

Electrode plate analysis: the positive electrode plate was cut using an argon ion beam in a direction perpendicular to the positive electrode plate, to expose a cross section, the cross section was photographed using a scanning electron microscope, and a longest diameter of lithium iron phosphate salt particles was statistically analyzed using a long diameter statistical method. The area of the active material was obtained through statistical analysis of a cross-sectional scanning electron microscope image of the positive electrode plate using Avizo 3D software. The following percentages were recorded: a cross-sectional area percentage A of the composite positive electrode material with a primary particle size of 50 nm-150 nm; a cross-sectional area percentage B of the composite positive electrode material with a primary particle size of 150 nm-1500 nm; and a cross-sectional area percentage C of the composite positive electrode material with a primary particle size not less than 1500 nm. The primary particle size in the cross-sectional image referred to a longest distance between two connected points along an edge.

### Gram capacity test:

The preparation and test process of the battery were as follows: 2.0000 g of a positive electrode active material corresponding to the preparation example, conductive carbon black, PVDF were mixed in a mass ratio of 0.9:0.05:0.05, and an organic solvent NMP (N-methylpyrrolidone) was added. After thorough mixing, a film with a thickness of 140 microns was applied to an aluminum foil and vacuum dried at 120°C for 2 h. A punch was used to make round pieces with a diameter of 13 mm, and a tablet press was used to press the pieces at 10 Mpa. The pieces were vacuum dried at 120°C for 12 h, and the weight of the positive electrode plate was measured. A button cell was assembled in an argon-protected glove box, a metal lithium plate served as a negative electrode, an electrolyte was a mixed solvent consisting of EC (ethylene carbonate) and DMC (1,2-dimethyl carbonate) that were in a volume ratio of 1 : 1, LiPF₆ was the electrolyte, and a separator was a Celgard 2400 microporous polyethylene film. The assembled battery was tested for electrical performance on a Blue Power battery tester. The battery was charged/discharged at a constant current of 0.1C for two weeks within the voltage range of 2.0 V-3.75 V, and then charged/discharged at a constant current of 1C for two weeks to test the gram capacity. During the charging process, there was a constant voltage process with a constant voltage of 3.75 V and a constant voltage cutoff current of 50 µA.

A gram capacity C1 during the first 0.1C charge and a gram capacity C2 during the first 1C discharge were recorded.

The test results are recorded in Table 1.

**Table 1**

| | Turbidity of slurry (FTU) | Powder compacted density (g/cm³) | A (%) | B (%) | C (%) | C2/C1 (mAh/g) | Mass proportion of magnetic substance (ppm) |
|---|---|---|---|---|---|---|---|
| Preparation example 1 | 240 | 2.680 | 15 | 60 | 25 | 150/161 | 0.87 |
| Preparation example 2 | 275 | 2.650 | 17 | 58 | 25 | 151/160 | 0.87 |
| Preparation example 3 | 230 | 2.600 | 13 | 62 | 25 | 146/161 | 0.86 |
| Preparation example 4 | 210 | 2.550 | 10 | 60 | 30 | 146/161 | 0.87 |
| Preparation example 5 | 205 | 2.550 | 9 | 61 | 30 | 144/161 | 0.87 |
| Preparation example 6 | 220 | 2.580 | 12 | 63 | 35 | 144/161 | 0.84 |
| Preparation example 7 | 255 | 2.530 | 18 | 50 | 32 | 148/160 | 0.89 |
| Preparation example 8 | 210 | 2.520 | 10 | 55 | 35 | 144/161 | 0.83 |
| Preparation example 9 | 200 | 2.480 | 5 | 75 | 20 | 146/161 | 0.83 |
| Preparation example 10 | 295 | 2.450 | 25 | 50 | 25 | 148/156 | 0.90 |
| Preparation example 11 | 240 | 2.480 | 5 | 85 | 10 | 144/160 | 0.87 |
| Preparation example 12 | 265 | 2.550 | 28 | 60 | 12 | 150/160 | 0.87 |
| Preparation example 13 | 212 | 2.500 | 10 | 55 | 35 | 143/161 | 0.85 |
| Preparation example 14 | 275 | 2.640 | 16 | 58 | 26 | 149/161 | 0.89 |
| Preparation example 15 | 201 | 2.520 | 6 | 74 | 20 | 139/160 | 0.82 |
| Preparation example 16 | 233 | 2.580 | 14 | 65 | 21 | 147/161 | 0.84 |
| Preparation example 17 | 243 | 2.610 | 15 | 68 | 17 | 149/161 | 0.88 |
| Preparation example 18 | 227 | 2.550 | 13 | 64 | 23 | 146/161 | 3000 |
| Preparation example 19 | 219 | 2.540 | 12 | 63 | 25 | 145/161 | 3000 |
| Preparation example 20 | 218 | 2.560 | 12 | 62 | 26 | 143/161 | 0.89 |
| Preparation example 21 | 226 | 2.570 | 12 | 66 | 22 | 147/161 | 0.82 |
| Preparation example 22 | 235 | 2.580 | 14 | 69 | 17 | 146/161 | 0.82 |
| Preparation example 23 | 215 | 2.500 | 10 | 55 | 35 | 140/161 | 0.79 |
| Preparation example 24 | 242 | 2.490 | 30 | 60 | 10 | 144/161 | 0.87 |
| Preparation example 25 | 230 | 2.42 | 29 | 60 | 11 | 144/158 | 0.87 |
| Preparation example 26 | 230 | 2.60 | 5 | 60 | 35 | 144/158 | 0.88 |
| Preparation example 27 | 245 | 2.45 | 25 | 58 | 17 | 145/161 | 0.87 |
| Preparation example 28 | 260 | 2.58 | 8 | 62 | 30 | 149/161 | 0.88 |
| Comparative preparation example 1 | 160 | 2.40 | 5 | 85 | 10 | 132/161 | 0 |
| Comparative preparation example 2 | 250 | 2.25 | 40 | 55 | 5 | 152/161 | 0.81 |
| Comparative preparation example 3 | 215 | 2.55 | 3 | 17 | 80 | 130/158 | 0.96 |

Based on comparison of each preparation example and Comparative preparation example 1, it can be seen that when a graphitization catalyst is used in the preparation process of the composite lithium iron phosphate positive electrode material, the turbidity of the slurry increases significantly, indicating that graphene is generated, and the discharge gram capacity of the corresponding button cell is increased.

Based on the comparison of Preparation examples 1 to 5, it can be seen that the particle size of the graphitization catalyst used affects the turbidity of the slurry, that is, affects the percentage of the graphene. When the particle size increases to 200 nm, as the particle size of the graphitization catalyst increases, the turbidity of the slurry increases, indicating that the percentage of the graphene in the resulting material increases and the catalytic efficiency of the graphitization catalyst is improved. However, when the particle size of the graphitization catalyst continues to increase to 400 nm, the turbidity of the slurry does not increase, indicating that its catalytic efficiency is not significantly improved; and when the particle size of the graphitization catalyst continues to increase, the turbidity of the slurry decreases instead, indicating that an excessively large particle size affects the catalytic effect of the graphitization catalyst.

Based on the comparison of Preparation example 1 and Preparation examples 6 to 10, it can be seen that as the amount of the graphitization catalyst used increases, the turbidity of the slurry increases, indicating that the percentage of the graphene in the resulting material increases. However, when the percentage of the graphene is excessively large, the actual proportion of the lithium iron phosphate active material in the composite material decreases, reducing the compacted density of the electrode plate and the capacity.

Based on the comparison of Preparation example 1 and Preparation examples 16 to 23, it can be seen that the catalytic efficiencies of various graphitization catalysts are different. Additionally, when metal is used as a graphitization catalyst in Preparation examples 18 and 19, there is significant residual metal in the positive electrode material, as indicated by the percentage of the magnetic substance in Table 1. The presence of the magnetic substance affects the self-discharge of the battery, thus affecting the service life of the battery. Additionally, when ferrocene is used as a graphitization catalyst in Preparation example 23, because ferrocene is prone to burning off, the turbidity of the corresponding slurry is small, resulting in a small percentage of the graphene, that is, a small amount of the graphene produced.

Based on the comparison of Preparation examples 1, 27, and 28, and Comparative preparation examples 2 and 3, it can be seen that within the range of 750°C to 820°C, the proportion of medium-sized particles in the composite positive electrode material is relatively large, allowing the powder compacted density of the material to be in a more appropriate range, and the turbidity of the slurry is large, indicating a large percentage of graphene, achieving a high discharge gram capacity of the battery. In Comparative preparation example 2, the sintering temperature is below 750°C. A lower sintering temperature indicates a larger proportion of small particles in the composite positive electrode material and a smaller powder compacted density, reducing the energy density of the cell. In the comparative preparation examples, the sintering temperature is above 840°C. A higher sintering temperature indicates a lower turbidity of the slurry of the composite positive electrode material and a smaller amount of the graphene produced, reducing the discharge gram capacity of the corresponding button cell.

Although this application has been described with reference to the preferred embodiments, various modifications to this application and replacements of the components therein with equivalents can be made without departing from the scope of this application. In particular, as long as there is no structural conflict, the various technical features mentioned in the implementations can be combined in any manners. This application is not limited to the specific embodiments disclosed in this specification but includes all technical solutions falling within the scope of the claims.

## Claims

1. A preparation method of a composite positive electrode material, wherein the preparation method comprises:
mixing a lithium source, a phosphorus source, an iron source, a carbon source, and a carbon graphitization catalyst in a predetermined ratio with a solvent to form a mixed slurry;
grinding and drying the mixed slurry to obtain a mixed dry substance; and
sintering the mixed dry substance to obtain the composite positive electrode material, a sintering temperature being 750°C-840°C.

2. The preparation method according to claim 1, wherein the carbon graphitization catalyst comprises any one or more of metal or metal oxide, the metal comprises Fe and/or Ni, and the metal oxide comprises any one or more of FeO, Fe₃O₄, Fe₂O₃, CuO, NiO, MnO, Mn₃O₄, V₂O₅, V₂O₃, or VO₄.

3. The preparation method according to claim 1 or 2, wherein an average particle size of the carbon graphitization catalyst is 100 nm-400 nm.

4. The preparation method according to any one of claims 1 to 3, wherein a mass ratio of the carbon graphitization catalyst to the carbon source is 1:100-1:30.

5. The preparation method according to any one of claims 1 to 4, wherein the mixed slurry further comprises a lithium-site doping-element raw material, a phosphorus-site doping-element raw material, an iron-site doping-element raw material, and an oxygen-site doping-element raw material, wherein in the mixed slurry, a total number of moles of element lithium in the lithium source and a doping element in the lithium-site doping-element raw material is M1, a total number of moles of element iron in the iron source and a doping element in the iron-site doping-element raw material is M2, a total number of moles of element phosphorus in the phosphorus source and a doping element in the phosphorus-site doping-element raw material is M3, M1:M2:M3 is (1.0-1.1):(0.95-1.0):(1.0-1.1), M2:M3 is less than 1:1, and a ratio of a mass of the carbon graphitization catalyst to a total mass of the iron source and the iron-site doping-element raw material is (1:1000)-(1:100).

6. The preparation method according to claim 5, wherein M2:M3 is greater than or equal to 0.96:1 and less than 1:1.

7. The preparation method according to any one of claims 1 to 6, wherein the polyanion-type positive electrode material comprises lithium-containing phosphate, and the lithium-containing phosphate comprises at least one of lithium iron phosphate and a doping and/or coating modified compound thereof.

8. The preparation method according to any one of claims 1 to 7, wherein the carbon source comprises one or more of glucose, sucrose, fructose, citric acid, starch, polyvinyl alcohol, polyethylene glycol, or polyaniline.

9. The preparation method according to any one of claims 1 to 8, wherein the grinding comprises ball milling and sand milling performed sequentially, Dᵥ50 of insoluble particles in the mixed slurry after the ball milling is 2.0 µm-5.0 µm, and Dᵥ50 of the insoluble particles in the mixed slurry after the sand milling is 0.3 µm-1.2 µm.

10. The preparation method according to any one of claims 1 to 9, wherein the sintering the mixed dry substance comprises the following process:
heating the mixed dry substance to 780°C-820°C, wherein a heating time is 2 h-9 h, and the temperature of 780°C-820°C is maintained for 6 h-20 h.

11. The preparation method according to any one of claims 1 to 10, wherein the sintering is conducted in a reducing atmosphere, and the reducing atmosphere comprises a reducing gas and a protective gas.

12. The preparation method according to claim 11, wherein the reducing gas comprises any one or more of hydrogen, acetone, propylene, carbon monoxide, methanol, acetylene, methane, ethylene, or ethane.

13. A composite positive electrode material, wherein the composite positive electrode material comprises a polyanion-type positive electrode material and a carbon material, the carbon material covers at least part of a surface of the polyanion-type positive electrode material and/or disperses between particles of the polyanion-type positive electrode material, the carbon material comprises graphene, and a powder compacted density of the composite positive electrode material under 226.0738 Mpa is greater than or equal to 2.42 g/cm³.

14. The composite positive electrode material according to claim 13, wherein the powder compacted density of the composite positive electrode material under 226.0738 Mpa is greater than or equal to 2.53 g/cm³.

15. The composite positive electrode material according to claim 13 or 14, wherein a room temperature turbidity of a slurry formed by mixing the composite positive electrode material with water in a mass ratio of 1:40 is 200 FTU-400 FTU, and/or a mass proportion of a magnetic substance in the composite positive electrode material is less than or equal to 1 ppm.

16. A positive electrode plate, comprising a positive electrode film layer, wherein the positive electrode film layer comprises a positive electrode active material, and the positive electrode active material comprises the composite positive electrode material according to any one of claims 13 to 15.

17. The positive electrode plate according to claim 16, wherein based on a total cross-sectional area of the positive electrode active material, a cross-sectional area percentage of the composite positive electrode material with a primary particle size of 50 nm-150 nm is 10%-35%, a cross-sectional area percentage of the composite positive electrode material with a primary particle size of 150 nm-1500 nm is 30%-60%, and a cross-sectional area percentage of the composite positive electrode material with a primary particle size not less than 1500 nm is 10%-35%.

18. A secondary battery, comprising a positive electrode plate, wherein the positive electrode plate comprises the positive electrode plate according to claim 16 or 17.

19. An electric apparatus, comprising a secondary battery, wherein the secondary battery comprises the secondary battery according to claim 18.
